(19) Europäisches Patentamt

European Patent Office

Office européen des brevets

(11) **EP 1 693 663 A2**

(12) **EUROPÄISCHE PATENTANMELDUNG**

(43) Veröffentlichungstag:
  **23.08.2006 Patentblatt 2006/34**

(51) Int Cl.:
  ***G01N 11/16*** *(2006.01)*

(21) Anmeldenummer: 06100813.2

(22) Anmeldetag: **25.01.2006**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU**<br><br>(30) Priorität: **18.02.2005 DE 102005007544** | (71) Anmelder: **ROBERT BOSCH GMBH**<br>**70442 Stuttgart (DE)**<br><br>(72) Erfinder: **Niemann, Markus**<br>**66701, Beckingen (DE)** |

(54) **Verfahren und Vorrichtung zur Erfassung zweier Parameter eines Fluids**

(57)   Ein Oszillator wird mit einem Primäroszillator angeregt, während der Oszillator mit dem Fluid in Kontakt steht, wird der Oszillator mit zwei Parametren angeregt, wobei der erste Parameter des Fluids den angeregten Oszillator mit einer ersten Phasenverzögerung und der zweite Parameter den angeregten Oszillator mit einer zweiten Phasenverzögerung dämpft. Die Schwingung des angeregten und bedämpften Oszillators wird als Schwingungssignal erfasst. Das Schwingungssignal wird mit einem phasenverschobenen Signal gemischt, welches aus dem Anregungssignal mit einer Phasenverzögerung generiert wird, welche wahlweise der ersten oder der zweiten Phasenverzögerung entspricht. Abschließend wird das gemischte Signal zeitlich gemittelt, um entsprechend der Wahl der Phasenverzögerung den ersten oder den zweiten Parameter zu bestimmen.

Fig. 1

EP 1 693 663 A2

## Beschreibung

STAND DER TECHNIK

Die vorliegende Erfindung betrifft ein Verfahren und eine Vorrichtung zur Erfassung zweier Parameter eines Fluids. Insbesondere betrifft die Erfmdung die Erfassung der Parameter mittels einer Sensoreinrichtung mit einem angeregten Oszillators.

Die Erfassung von physikalischen Eigenschaften und zugeordneter Größen (Parameter) einer Flüssigkeit, wie z.B. der Viskosität und der Permitivität, ermöglichen Rückschlüsse auf ablaufende chemische Reaktionen und deren Verlauf sowie eine Bestimmung von physikalischen Eigenschaften, wie z.B. dem Mischungsverhältnis zweier Flüssigkeiten. Aufgrund der Beengtheit in vielen Reaktionskammem und Zuleitungskanälen lässt sich nur eine begrenzte Anzahl an Sensoren einsetzen. Deshalb werden Sensoren und Vorrichtungen zur Auswertung der Sensoren benötigt, welche eine möglichst universelle Anwendung und eine Erfassung einer Vielzahl an physikalischen Parametern ermöglichen.

Obwohl die vorliegende Erfindung auf beliebige Sensoreinrichtungen mit einem angeregten Oszillator zur Erfassung zweier Parameter eines Fluids anwendbar ist, wird die ihr zugrunde liegende Problematik in Bezug auf eine Viskositäts- und Permitivitätsbestimmung einer Flüssigkeit mit einem elektrischen Schwingkreis erläutert.

Die DE 199 58 769 A1 offenbart ein Verfahren und eine Vorrichtung zur Auswertung einer Sensoreinrichtung, welche die Viskosität einer Flüssigkeit mittels eines in die Flüssigkeit getauchten angeregten Quarzes bestimmt. An das Quarz wird ein oszillatorisches Anregungssignal angelegt, die sich ergebende Anregungsamplitude in Phase mit dem Anregungssignal gemischt und zeitlich gemittelt, um ausschließlich die Wirkleistung des eingetauchten Quarzes zu bestimmen. Da mit steigender Viskosität der Flüssigkeit die Wirkleistung zunimmt, ist somit eine Erfassung der Viskosität möglich.

Die Erfassung der Permitivität einer Flüssigkeit erfolgt herkömmlicherweise mittels einer koaxialen Struktur, welche in die Flüssigkeit eingetaucht wird. Durch Anlegen eines Wechselspannungspotentials lässt sich die Kapazität der Koaxialstruktur und damit die Permitivität der Flüssigkeit bestimmen.

Nachteiligerweise werden für eine Bestimmung der Permitivität und der Viskosität einer Flüssigkeit zwei Sensoren benötigt.

Es ist eine Aufgabe der vorliegenden Erfindung, ein Verfahren bereitzustellen, welches die Erfassung von verschiedenen Signalen mittels einer Sensoreinrichtung ermöglicht.

VORTEILE DER ERFINDUNG

Das erfmdungsgemäße Verfahren mit den Merkmalen des Anspruchs 1 weist gegenüber dem Stand der Technik den Vorteil auf, dass sich mit einer einzigen Sensoreinrichtung zwei Parameter einer Flüssigkeit erfassen lassen.

Die der vorliegenden Erfindung zugrundeliegende Idee ist, dass eine erste Eigenschaft eines Fluids (Flüssigkeit, Gas oder ein Gemisch beider) zu einer Dämpfung eines angeregten Oszillator mit einer ersten charakteristischen Phasenverzögerung und eine zweite Eigenschaft zu einer Dämpfung mit einer zweiten charakteristischen Phasenverzögerung führt. Durch eine phasenstarre Erfassung der Schwingung des angeregten Oszillators zu einem anregenden Primäroszillator werden die zwei Parameter der Flüssigkeit individuell erfasst.

Das erfmdungsgemäße Verfahren sieht vor, einen Oszillator mit einem Primäroszillator anzuregen, während der Oszillator mit dem Fluid in Kontakt steht, den Oszillator mit zwei Parametern anzuregen, wobei der erste Parameter des Fluids den angeregten Oszillator mit einer ersten Phasenverzögerung und der zweite Parameter den angeregten Oszillator mit einer zweiten Phasenverzögerung dämpft. Die Schwingung des angeregten und bedämpften Oszillators wird als Schwingungssignal erfasst. Das Schwingungssignal wird mit einem phasenverschobenen Signal gemischt, welches aus dem Anregungssignal mit einer dritten Phasenverzögerung generiert wird, welche wahlweise der ersten oder der zweiten Phasenverzögerung entspricht. Abschließend wird das gemischte Signal zeitlich gemittelt, um entsprechend der Wahl der dritten Phasenverzögerung den ersten oder den zweiten Parameter zu bestimmen.

In den Unteransprüchen finden sich vorteilhafte Weiterbildungen und Verbesserungen des erfindungsgemäßen Gegenstands.

Gemäß einer bevorzugten Weiterbildung werden die weiteren folgenden Schritten sequentiell oder parallel zum Erfassen, Mischen und zeitlichen Mitteln der ersten Signale ausgeführt: Generieren eines zweiten phasenverschobenen Signals mit einer vierten Phasenverzögerung aus dem Anregungssignal, wobei die vierte Phasenverzögerung die zweite Phasenverzögerung aus der ersten oder zweiten Phasenverzögerung ist, welche nicht gewählt wurde; Mischen des Schwingungssignals mit dem zweiten phasenverschobenen Signal zum Erzeugen eines zweiten gemischten Signals; und zeitliches Mitteln des zweiten gemischten Signals, um entsprechend der vierten Phasenverzögerung den anderen Parameter des Fluids zu bestimmen.

Gemäß einer bevorzugten Weiterbildung ist die dritte Phasenverzögerung gleich 90° und/oder die vierte Phasenverzögerung gleich 0°. Die Erfassung des Schwingungssignals in Phase ermittelt die Wirkleistung des Oszillators in dem Fluid, welche z.B. ein Maß für die Viskosität der Flüssigkeit ist. Für 90° wird durch das erste gemischte Signal ausschließlich die Blindleistung des Oszillators bestimmt, im Fall eines elektrischen Schwingkreises kann somit z.B. die Kapazität und damit für die Permitivität der Flüssigkeit bestimmt werden.

Gemäß einer weiteren Weiterbildung ist der Oszillator ein Schwingkreis und das Schwingungssignal des Schwingkreises wird als ein Strom erfasst, welcher über einen Sensorwiderstand von einer Masse aus in den Schwingkreis fließt.

Gemäß einer weiteren Weiterbildung wird das Anregungssignal um eine Zentralfrequenz mit einem Modulationssignal moduliert, ein Steuersignal durch Mischen der Amplitude des ersten oder zweiten gemischten Signals mit dem Modulationssignal generiert und das Steuersignal der Primäroszillatoreinrichtung zugeführt, wodurch die Zentralfrequenz resonant zu einer Resonanzfrequenz des Schwingkreises geregelt wird.

Gemäß einer weiteren Weiterbildung ist ein Oszillator mit einem Primäroszillator zum Übertragen eines Anregungssignals des Primäroszillators an den Oszillator verbunden. Eine Erfassungseinrichtung mit der Sensoreinrichtung zum Erfassen des Schwingungssignals des Schwingkreises verbunden. Eine erste Verzögerungsstrecke zwischen einer Mischereinrichtung und dem Primäroszillator angeordnet, um ein drittes phasenverschobenes Signal zu generieren und dieses der ersten Mischereinrichtung zuzuführen, welche mit der Sensoreinrichtung verbunden ist und das erste gemischte Signal an eine erste Filtereinrichtung zum zeitlichen Mitteln des ersten gemischten Signals übermittelt.

Gemäß einer weiteren bevorzugten Weiterbildung weist der Schwingkreis ein Quarz auf.

Gemäß einer weiteren bevorzugten Weiterbildung weist die erste Verzögerungsstrecke ein Element mit einer einstellbaren Phasenverzögerung auf.

Gemäß einer weiteren bevorzugten Weiterbildung ist eine zweite Mischereinrichtung mit der Erfassungseinrichtung und dem Primäroszillator zum Mischen des Schwingungssignals mit dem Anregungssignal zum Erzeugen eines zweiten gemischten Signals verbunden.


ZEICHNUNGEN

Ausführungsbeispiele der Erfindung sind in den schematischen Zeichnungen dargestellt und in der nachfolgenden Beschreibung näher erläutert.

Es zeigen:

Fig. 1    ein Blockschaltbild einer ersten Ausführungsform der erfindungsgemäßen Vorrichtung; und

Fig. 2    ein Blockschaltbild einer zweiten Ausführungsform der erfindungsgemäßen Vorrichtung.


BESCHREIBUNG DER AUSFÜHRUNGSBEISPIELE

In den Figuren bezeichnen gleiche Bezugszeichen gleiche oder funktionsgleiche Bestandteile.

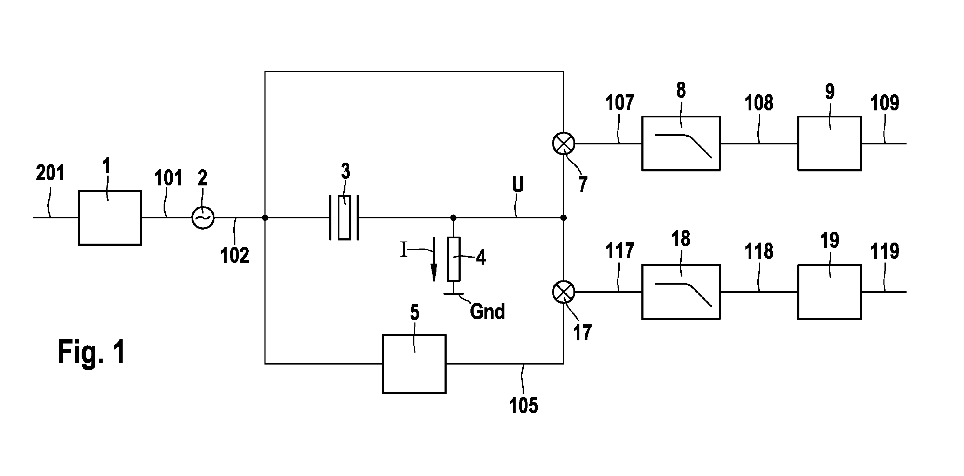

Fig. 1 zeigt ein Blockschaltbild einer Ausführungsform der vorliegenden Erfindung. Ein Schwingkreis 3 wird durch ein Anregungssignal 102 aus einer primären Oszillationseinrichtung 2 gespeist. Das Anregungssignal lässt sich durch sin (wt) beschreiben, wobei w die Frequenz des Anregungssignals 100 und t die Zeit ist. Der Schwingkreis 3 ist mit einem Sensorwiderstand 4 in Serie geschaltet, wobei letzterer mit einer Masse Gnd verbunden ist. An einem Verknüpfungspunkt des Schwingkreises 3 mit dem Sensorwiderstand 4 wird ein Spannungssignal U abgegriffen, welches proportional dem Stromfluss I durch den Sensorwiderstand und dem Schwingkreis 3 ist. Das Spannungssignal U wird nachfolgend als Schwingungssignal bezeichnet, da es ein Maß für die Amplitude der Schwingung in dem Schwingkreis 3 ist. Der Schwingkreis 3 weist ein Quarz auf. Das Quarz wird in einem Ersatzschaltbild durch eine statische Kapazität $C_o$ und einer dazu parallel geschalteten Serienschaltung aus einer Induktivität L, einer Kapazität C und einem Widerstand R beschrieben.

Der Widerstand R beschreibt die Wirkleistung des Schwingkreises und umfasst neben ohmschen Verlusten auch die mechanische Leistung, welche der Schwingkreis in einer Flüssigkeit verrichtet. Ein Summand des Widerstandes R ist proportional zu $\sqrt{\eta\rho}$ , wobei $\eta$ die dynamische Viskosität und $\rho$ die Dichte der viskosen Flüssigkeit angibt. Der Widerstand des Schwingkreises 3 nimmt somit mit zunehmender Viskosität zu, entsprechend nimmt der Stromfluss I durch den Schwingkreis 3 ab und dadurch verringert sich das Schwingungssignal U. Der Widerstand R verändert die Phase des Stromflusses I durch den Schwingkreis 3 nicht. Daher ist das Schwingungssignal U, welches der Viskosität zugeordnet wird, in Phase mit dem Anregungssignal 102.

Zwei Anschlusskontakte des Schwingkreises 3 bilden zwei Kondensatorflächen, wobei die zu untersuchende Flüssigkeit als Dielektrikum zwischen den Kondensatoren die Kapazität mit beeinflusst. Diese in den meist als parasitäre betrachtete statische Kapazität $C_o$ wird ausgemessen und unter Annahme gleichbleibender Anschlusskontakte somit die Permitivität der dielektrischen Flüssigkeit bestimmt. Die statische Kapazität $C_o$ beeinflusst die Phase des durch den Schwingkreis 3 fließenden Stroms I. Eine rein kapazitative Last durch den Schwingkreis 3 fiihrt zu einer Phasenverzögerung des Anregungssignals 102 zu dem Schwingungssignals von 90 Grad.

Das gesamte Schwingungssignal U setzt sich somit aus einem Anteil zusammen, welcher in Phase zu dem Anregungssignal 102 und einem zweiten Anteil zusammen, welcher um 90 Grad außer Phase zu dem Anregungssignal 102 ist. Eine Aufgabe der vorliegenden Erfmdung besteht nun darin, das Schwingungssignal U in die beiden Anteile aufzuteilen, welche der Viskosität bzw. der Permitivität entsprechen. Einem ersten Mischer 7 wird das Anregungssignal 102 und das Schwingungssignal U zugeführt und dann mittels eines Tiefpassfilters 8 gefiltert. Das sich ergebende Signal 108 enthält nur Anteile des Schwingungssignals 102, welche in Phase zu dem Anregungssignal 102 sind, und ist daher ein Maß für die Viskosität der Flüssigkeit. In einem zweiten Ast durchläuft das Anregungssignal 102 eine Verzögerungsstrecke 5, um ein phasenverschobenes Signal zu erzeugen, welches einem zweiten Mischer zusammen mit dem Schwingungssignal U zugeführt wird. Dieses zweite gemischte Signal 117 wird einem Tiefpass 18 zugeführt. Das sich ergebende Signal 118 weist nur die Anteile des Schwingungssignals U auf, welche um 90 Grad außer Phase zu dem Anregungssignal 102 sind und ist somit ein Maß für die Permitivität der Flüssigkeit. Die Filter 107, 117 weisen eine Filtercharakteristik mit einer Zeitkonstante auf, welche größer ist als eine Periode des Anregungssignals U, um eine zeitliche Mittelung über die Schwingung zu erhalten.

Die Frequenz des Anregungssignals entspricht einer Resonanzfrequenz des Schwingkreises 3. Dies hat den Vorteil, dass die induktive Komponente L und die Kapazität C, welche die Resonanzfrequenz vorgeben, dann nicht zu der Impedanz des Schwingkreises beitragen. Die Erfassung des Schwingungssignals U kann auch als eine Bestimmung der Impedanz des Schwingkreises in dem Spannungsteiler gebildet aus dem Schwingkreis und dem Sensorwiderstand 4 betrachtet werden. Hierbei ist es von Vorteil, wenn nur die Viskosität und die Permitivität zu der Impedanz beitragen und die induktive Komponente L und die Kapazität C möglichst klein sind, um ein hohes Signal-zu-Rausch-Verhältnis zu erhalten.

In einer bevorzugten Ausführungsform wird die Frequenz des Anregungssignals 102 periodisch um eine Zentralfrequenz moduliert, wobei die Resonanzfrequenz des Schwingkreises 3 innerhalb des Modulationsbereiches liegt. Dazu wird eine Steuerungseinrichtung 1, z.B. ein Sägezahngenerator an die primäre Oszillationsquelle 2 angeschlossen. Spitzenwertdetektoren 9, 19, welche den Tiefpassfiltern 8, 118 nachgeschaltet sind, erfassen die Maximalwerte der ersten und zweiten gemischten Signale 107 und 117, welche sich bei resonanter Anregung des Schwingkreises 3 einstellen.

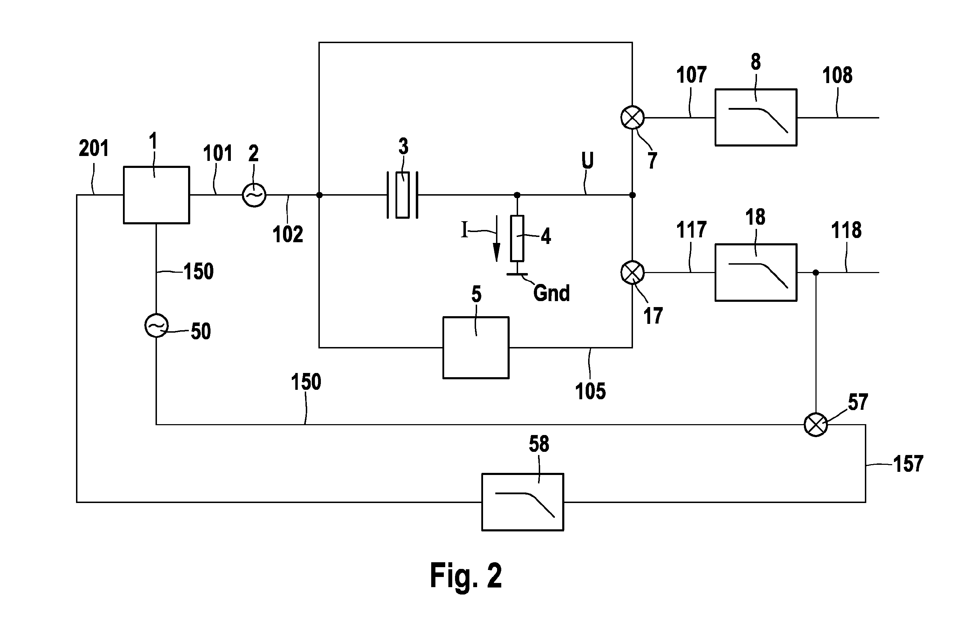

Fig. 2 zeigt eine Blockschaltdarstellung einer zweiten Ausführungsform der vorliegenden Erfindung. Der Steuereinrichtung 1 wird ein periodisch oszillierendes Modulationssignal 150 eines Modulators 50 zugefiihrt, welches die Steuereinrichtung 1 in ein Steuersignal 101 umsetzt, mit welchem eine Frequenzmodulation des Anregungssignals 102 symmetrisch um eine Zentralfrequenz phasenstarr zu dem Modulationssignal 150 erreicht wird. Die Frequenzmodulation des Anregungssignals 102 überträgt sich in die gefilterten gemischten ersten und zweiten Signale 108 und 118. In der in Fig. 2 dargestellten Ausführungsform wird beispielhaft das oszillierende zweite Signal abgegriffen und zusammen mit dem Modulationssignal 150 einem Mischer 57 zugeführt. Das gemischte Signal 157 wird mittels einer Tiefpasseinrichtung 58 gefiltert und als Regelungssignal 201 der Steuerungseinrichtung 12 zugeführt. Das Regelungssignal 201 weist ein erster Vorzeichen auf, wenn die Zentralfrequenz geringer als die Resonanzfrequenz des Schwingkreises 3 ist und ein zweites zu dem ersten negiertes Vorzeichen auf, wenn die Zentralfrequenz größer als die Resonanzfrequenz des Schwingkreises 3 ist. Die Steuerungseinrichtung 1 stellt die Zentralfrequenz in Abhängigkeit des Regelungssignals 201 ein. Dadurch wird eine geschlossene negative Rückkoppelungsschleife realisiert, welche die Frequenz des Anregungssignals 102 resonant zu dem Schwingkreis 3 einstellt. Weitere benötigte Komponenten der Rückkopplungsschleife sind Verstärker, Integrator und/oder Inverter.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Erfindung nicht auf kombinierte Viskosität-Permitivität-Sensoren beschränkt, sondern auf alle Sensoren anwendbar, die als zwei um 90 Grad phasenverschobene Signale eines Schwingkreises messbar sind.

Zudem ist die Erfindung nicht auf einen elektrische Schwingkreis als angeregter Oszillator beschränkt, sondern ebenso können mechanisch oder optisch angeregte Oszillatoren zur Erfassung der Parameter eines Fluids verwendet werden.

**Patentansprüche**

1. Verfahren zur Erfassung eines ersten und eines zweiten Parameter eines Fluids mit einer Sensoreinrichtung mit einem Oszillator (3, 13) mit den folgenden Schritten:

   Anregen des Oszillators (3, 13) durch ein Anregungssignals (102) eines Primäroszillators (2); Anregen des Oszillators mit zwei Parametern, während der Oszillator mit dem Fluid in Kontakt steht , wobei der erste Parameter des Fluids den angeregten Oszillator (3, 13) mit einer ersten Phasenverzögerung bedämpft und der zweite Parameter den angeregten Oszillator (3, 13) mit einer zweiten Phasenverzögerung bedämpft; Erfassen eines Schwingungssignals (U) des angeregten und bedämpften Oszillators (3, 13); Generieren eines ersten phasenverschobenen Signals (105, 115) mit einer dritten Phasenverzögerung aus dem Anregungssignal (102), wobei die dritte Phasenverzögerung gleich der ersten oder zweiten Phasenverzögerung gewählt wird; Mischen des Schwingungssignals mit dem ersten phasenverschobenen Signal (105, 115) zum Erzeugen eines ersten gemischten Signals (117, 127); und zeitliches Mitteln des ersten gemischten Signals (117, 127), um entsprechend der dritten Phasenverzögerung den ersten oder zweiten Parameter des Fluids zu bestimmen.

2. Verfahren nach Anspruch 1 mit den weiteren Schritten, welche sequentiell oder parallel zum Erfassen, Mischen und zeitlichen Mitteln der ersten Signale ausgeführt werden:

Generieren eines zweiten phasenverschobenen Signals (105, 115) mit einer vierten Phasenverzögerung aus dem Anregungssignal (102), wobei die vierte Phasenverzögerung die zweite Phasenverzögerung aus der ersten oder zweiten Phasenverzögerung ist, welche nicht gewählt wurde; Mischen des Schwingungssignals mit dem zweiten phasenverschobenen Signal (105, 115) zum Erzeugen eines zweiten gemischten Signals (117, 127); und zeitliches Mitteln des zweiten gemischten Signals (117, 127), um entsprechend der vierten Phasenverzögerung den anderen Parameter des Fluids zu bestimmen.

3. Verfahren nach mindestens einem der Ansprüche 1 oder 2, **dadurch gekennzeichnet, dass** der Oszillator einen Schwingkreis (3, 13) aufweist und zum Erfassen des Schwingungssignals (U) des angeregten Schwingkreises (3) ein Strom (I) erfasst wird, welcher von einer Masse (Gnd) über einen Sensorwiderstand (4) in den Schwingkreis (3) fließt.

4. Verfahren nach mindestens einem der vorhergehenden Ansprüche, **dadurch gekennzeichnet, dass** das dritte phasenverschobene Signal (105, 115) um 90° und/oder das vierte phasenverschoben Signal um 0° phasenverschoben zu dem Anregungssignal (102) generiert wird

5. Verfahren nach mindestens einem der vorhergehenden Ansprüche, **dadurch gekennzeichnet, dass** das Anregungssignal (102) um eine Zentralfrequenz moduliert wird und ein Steuersignal (201) durch Mischen des ersten oder zweiten gemischten Signals (107, 117) mit dem Modulationssignal gewonnen wird, und das Steuersignal (201) der Primäroszillatoreinrichtung (2) zugeführt wird, um die Zentralfrequenz resonant zu einer Resonanzfrequenz des Oszillators (3) zu regeln.

6. Verfahren nach mindestens einem der vorhergehenden Ansprüche, **dadurch gekennzeichnet, dass** die Anregung des Oszillators (3) resonant erfolgt.

7. Vorrichtung zum Ausführen des Verfahrens nach Anspruch 1, mit:

einem Oszillator (3, 13), welcher mit einem Primäroszillator (2) zum Übertragen eines Anregungssignals (102) des Primäroszillators an den Oszillator (3, 13) verbunden ist; einer Erfassungseinrichtung, welche mit der Sensoreinrichtung (3) zum Erfassen des Schwingungssignals (U) des Schwingkreises (3) verbunden ist; einer ersten Verzögerungsstrecke (5, 15), welche zwischen einer Mischereinrichtung (7, 17) und dem Primäroszillator (2) angeordnet ist, um ein drittes phasenverschobenes Signal zu generieren und dieses der ersten Mischereinrichtung (7, 17) zuzuführen, welche mit der Sensoreinrichtung (3) verbunden ist und das erste gemischte Signal an eine erste Filtereinrichtung (8, 18) zum zeitlichen Mitteln des ersten gemischten Signals (117, 127) übermittelt.

8. Vorrichtung nach Anspruch 7, **dadurch gekennzeichnet, dass** der Oszillator (3, 13) ein Quarz aufweist.

9. Vorrichtung nach mindestens einem der vorhergehenden Ansprüche 7 bis 9, dass die erste Verzögerungsstrecke (5) ein Element mit einer einstellbaren Phasenverzögerung aufweist.

10. Vorrichtung nach mindestens einem der vorhergehenden Ansprüche 7 oder 8, **dadurch gekennzeichnet, dass** eine zweite Mischereinrichtung (8, 18) mit der Erfassungseinrichtung und dem Primäroszillator zum Mischen des Schwingungssignals (U) mit dem Anregungssignal zum Erzeugen eines zweiten gemischten Signals (117, 127) verbunden ist.

Fig. 1

EP 1 693 663 A2

Fig. 2

EP 1 693 663 A2